# EUROPEAN PATENT APPLICATION

(11) **EP 3 690 066 A1**
(43) Date of publication of application: **05.08.2020**
(21) Application number: 17927214.1
(22) Date of filing: 28.09.2017
(51) Int. Cl.: C21C 5/52, C21B 13/12, C21C 5/46, F27B 3/08, F27B 3/20, F27B 3/22, F27D 3/16

(54) **METHOD FOR ADJUSTING MELTING-REFINING FURNACE AND MELTING-REFINING FURNACE**

(71) Applicant: Taiyo Nippon Sanso Corporation, Tokyo 142-8558 (JP)
(72) Inventor: HAGIHARA Yoshiyuki, Tokyo 142-8558 (JP); YAMAMOTO Yasuyuki, Tokyo 142-8558 (JP); SEINO Naoki, Tokyo 142-8558 (JP)
(74) Representative: HGF
(86) International application number: PCT/JP2017/035235
(87) International publication number: WO 2019/064433

(57) **Abstract**

The object of the present invention is to improve the efficiency when operating the melting/refining furnace of the cold iron source using a burners and a lance, or during refining, and the present invention provides a method for operating a melting/refining furnace comprising a through hole so as to penetrate a furnace wall, at least one burners provided in the through hole; and at least one lances installed in an oxidant gas supply hole provided above the through-hole for the burner, wherein an amount of oxygen introduced in the melting step is adjusted to a range calculated based on a the furnace volume.

## Description

### Field of the Invention

The present invention relates to a method for operating a melting/refining furnace using an oxygen burner and a lance and a melting/refining furnace.

### Description of Related Art

Burners which heat an object to be heated by burning an oxidant gas (oxygen, air, oxygen-enriched air, and the like) containing oxygen and fuel are used in various production processes. For example, in a steel producing process using an electric furnace, when a raw material such as iron scraps is heated and melted in the electric furnace, a low temperature region called a cold spot is generated in the raw material, and the raw material may be difficult to melt in this region. In such a case, the combined use of a burner as disclosed in Patent Document 1 can increase the heating efficiency of the raw material, reduce the amount of power used for melting the raw material, and reduce the melting cost.

In addition, a part of the raw material can be oxidized and melted by the oxidant gas to promote cutting, and the heating efficiency of the raw material can be further increased. Furthermore, it is possible to promote combustion of an unburned gas (such as carbon monoxide) by supplying the oxidant gas.

For example, Patent Document 2 discloses an invention which uses oxygen gas preheated to a high temperature in advance in order to increase the heating efficiency at the time of secondary combustion by oxidant gas.

### Prior Art Documents

### Patent Literature

Patent Document 1: Japanese Patent No. 4050195
Patent Document 2: Japanese Unexamined Patent Application, First Publication No. 2000-337776

### Disclosure of the Invention

### Problem to be Solved by the Invention

In such operations, the raw material is auxiliary melted by the burner for the purpose of reducing the melting cost. Therefore, there is a demand for reducing the consumption of the oxidant gas blown into the electric furnace as much as possible and suppressing the peroxidation of the raw material for improving the yield.

The present invention has been made in view of the above circumstances, and the object of the present invention is to improve the efficiency when operating the melting/refining furnace of the cold iron source using a burners and a lance, or during refining.

### Means to Solve the Problem

In order to solve the problems, the present invention provides a method for melting/refining a cold iron source using a melting/refining furnace,
wherein the method includes: a refining step comprising: a first step in which a cold iron source is supplied from an upper part of the melting/refining furnace; a second step in which the cold iron source is mainly melted by energizing an electrode provided in a center of the melting/refining furnace; a third step in which the cold iron source is auxiliary melted by a burner provided on a furnace wall of the melting/refining furnace; and a fourth step in which an oxidant gas (for example, oxygen or an oxidant gas containing at least oxygen) is ejected from a lance installed in an oxidant gas ejection hole provided in the furnace wall above the burner downward from the horizontal direction, the oxidant gas is reacted with carbon monoxide, hydrogen, or a mixture of carbon monoxide and hydrogen which are generated during melting of the cold iron source; and a refining step in which impurities are removed by introducing oxygen into the molten metal generated by melting the cold iron source;
the fourth step starts at the same time as or immediately after the start of the third step, and ends with the start of the refining step,
when a volume of the melting/refining furnace is V (m³) and an amount Q (Nm³/h) of oxygen introduced in the fourth step, V/Q is in a range from 0.1 to 0.8.

A melting/refining furnace of the present invention is a furnace for carrying out the method for melting/refining a cold iron source, wherein the melting/refining furnace is an electric furnace having an opening for introducing a cold iron source in the upper part, the electric furnace includes: an electrode which is provided in the center of the electric furnace and configured to melt the cold iron source; a burner which is provided on a furnace wall and configured to auxiliary melt the cold iron source; a lance which is provided on the furnace wall above the burner and is configured to introduce oxygen; and an oxygen flow rate adjustment mechanism which is configured to supply a certain amount of oxygen to the lance, an install position of the burner and the lance on the furnace wall satisfies the following conditions:
when a distance from a surface of a molten metal to a tip surface of the burner is L₁, and a distance from the surface of the molten metal to a tip surface of the lance is L₂, L₁ < L₂;
when an angle between a center axis of the burner and a horizontal plane is α, and an angle between a center axis of the lance and the horizontal plane is β,
α ≥ β;
α > 0°; and
β ≥ 0°

The oxygen flow rate adjusting mechanism includes a flow rate control valve, a flow rate controller, a pressure gauge, and a pressure control valve.

### Effects of the Invention

According to the present invention, during operation of a melting/refining furnace for a cold iron source using a burner and a lance or during refining a cold iron source, it becomes possible to eject an appropriate amount of an oxidant gas into a furnace from an appropriate position, and therefore, the consumption of the oxidant gas can be minimized, the melting efficiency can be improved.

### Brief description of drawings

FIG. 1 is a schematic diagram showing a melting/refining furnace used in the present invention
FIG. 2 is a schematic diagram at the time of removing an upper lid of the melting/refining furnace used in the present invention and introducing a cold iron source.
FIG. 3 is a schematic diagram showing a positional relationship between a burner and a lance provided to a wall of an electric furnace.
FIG. 4 is a schematic diagram showing an arrangement of burners seen from the electric furnace upper part.
FIG. 5 is a schematic diagram showing a burner (burner lance) which has a lance function in the embodiment.
FIG. 6 is a schematic diagram showing a flow rate control mechanism of oxygen supplied from a lance into a furnace.
FIG. 7 is a diagram showing a relationship between the amount of carbon monoxide and hydrogen in an exhaust gas from the melting/refining furnace and the ratio of a furnace volume V₁/an amount Q of oxygen introduced.
FIG. 8 is a diagram showing a relationship between an amount of carbon monoxide and hydrogen in an exhaust gas from a melting/refining furnace and the ratio of a furnace volume V₂/an amount Q of oxygen introduced.

### Detailed Description of the Invention

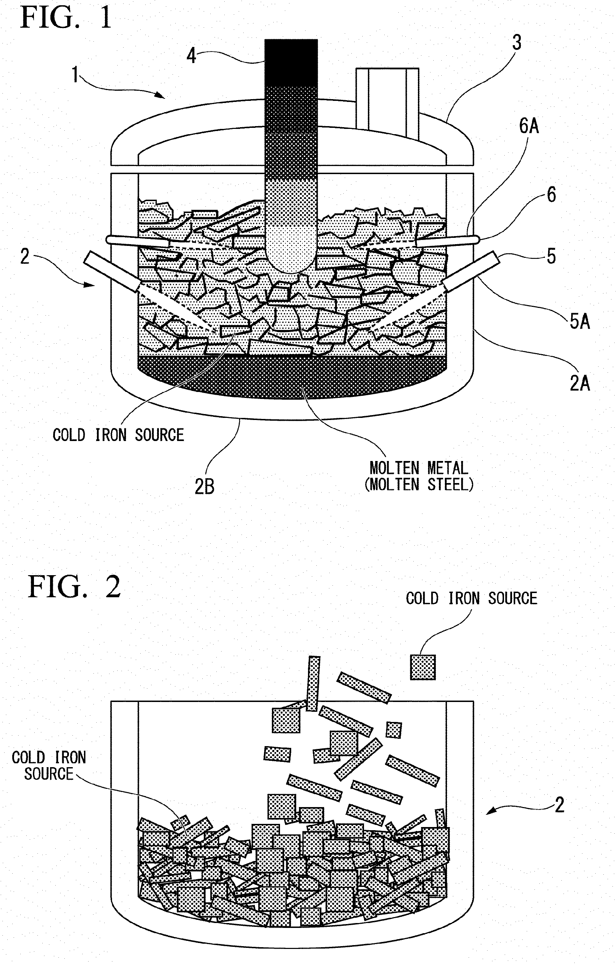

An embodiment of the present invention will be described. A melting/refining furnace of the cold iron source used in the present invention is shown in FIG. 1. The melting/refining furnace 1 (hereinafter sometimes referred to as an electric furnace) shown in FIG. 1 is an electric furnace having an electrode 4 at the center thereof. The electric furnace 1 has a cylindrical furnace body 2, an opening is provided at the top, and a furnace lid 3 which closes the opening. A furnace bottom 2B is provided in the lower part. The number of the electrodes 4 may be one or three depending on each furnace. In the present embodiment, the number of the electrodes is one.

When the cold iron source is put into the electric furnace 1, for example, as shown in FIG. 2, the electrode 4 is pulled out, the furnace lid 3 is removed, and then the cold iron source is put in from the opening at the top of the furnace body 2.

The electric furnace 1 is provided with a through hole 5A so as to penetrate a furnace wall 2A forming the furnace body 2, and a burner 5 is installed in the through hole 5A. In the furnace wall 2A, an oxidant gas through hole 6A is further provided above the through hole 5A so as to penetrate the furnace wall 2A. The oxidant gas through hole 6A is provided with a lance 6 for introducing an oxidant gas (oxygen or an oxidant gas containing at least oxygen) into the furnace 1. The burner 5 is inserted from the through hole 5A and the lance 6 is inserted from the combustion-supporting fluid through hole 6A toward the furnace bottom 2B and fixed.

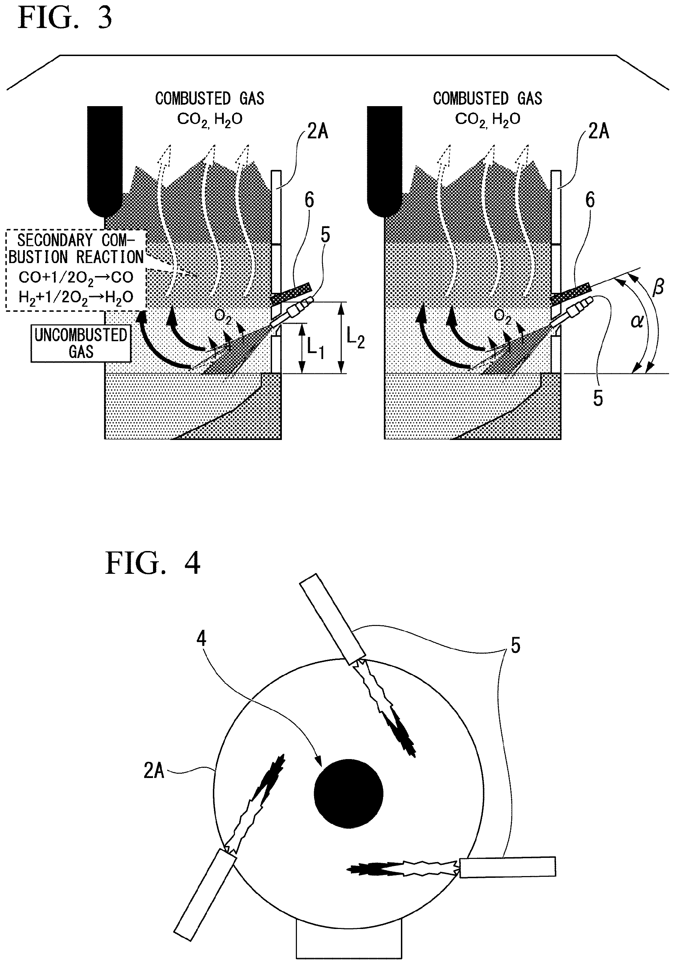

FIG. 3 is a diagram showing an arrangement of the burner 5 and the lance 6 provided on the furnace wall 2A of the electric furnace 1. The installation position of the lance 6 on the furnace wall 2A is above the installation position of the burner 5. That is, when the height position of the burner 5 (the distance between the tip surface of the burner and the surface of the molten metal) is L₁, and the height position of the lance 6 (the distance between the tip surface of the lance and the surface of the molten metal) is L₂, the burner 5 and the lance 6 are installed so that L₁ < L₂ (the left diagram in FIG. 3). Here, the surface of the molten metal means the upper surface of the molten metal formed by molten steel obtained by melting the cold iron source.

When the angle formed by a center axis of the burner 5 and the horizontal direction is α, the burner 5 is fixed so that 90° > α > 0° (right diagram in FIG. 3). More preferably, 60° < α < 45°. Further, when an angle formed by a center axis of the lance 6 and the horizontal direction is β, the lance 6 is fixed so that α ≥ β ≥ 0° (right diagram in FIG. 3). That is, the ejection direction of the oxidant gas from the lance 6 is a direction having an angle equal to or greater than the angle formed by the direction in which the flame is formed by the burner 5 with respect to the horizontal direction. By setting the direction of the lance 6 in this way, the unburned gas (mainly carbon monoxide and hydrogen) when the burner 5 is burned can be efficiently combusted by the oxidant gas from the lance 6.

FIG. 4 is a diagram showing the arrangement of the burners 5 from the upper part of the electric furnace 1. FIG. 4 shows an example in which three burners 5 are installed. The flame of the burner 5 is directed toward a vicinity of the center between the furnace wall 2A and the electrodes 4 at which the cold iron source is not sufficiently heated. In order not to damage the electrode 4, it is desirable to install the burner 5 so that the flame does not directly contact the electrode 4.

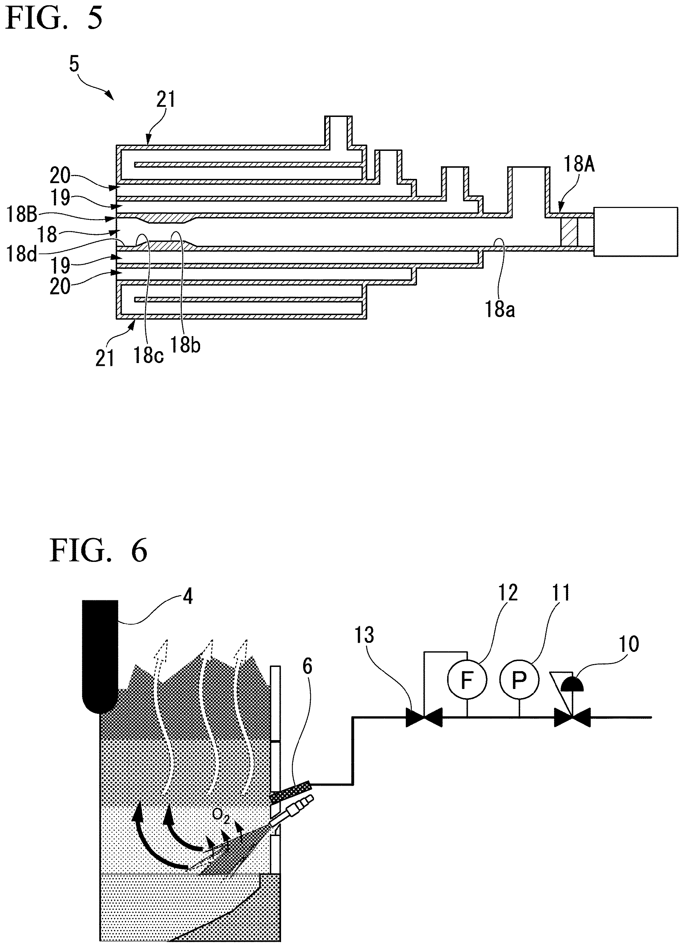

FIG. 5 is a schematic cross-sectional diagram showing the configuration of the burner 5 in the present embodiment. The burner 5 shown in FIG. 5 is a burner having a lance function (burner lance). An oxidant gas supply pipe 18 for supplying the oxidant gas containing oxygen is provided at the center of the oxygen burner lance 5 in the present embodiment, and a fuel fluid supply pipe 19 for supplying a fuel fluid is provided on the outer periphery of the oxidant gas supply pipe 18. In addition, an oxidant gas supply pipe 20 is provided concentrically on the outer periphery of the fuel fluid supply pipe 19. A reflux type water cooling jacket 21 is provided on the outer periphery of the combustion-supporting fluid supply pipe 20.

Note that the oxidant gas supply pipe 20 may not be provided, and the reflux water cooling jacket 21 may be provided on the outer periphery of the fuel fluid supply pipe 19. When the oxidant gas supply pipe 20 is provided, the flame length can be adjusted by adjusting the oxygen flow rate ratio between the oxidant gas supply pipes 18 and the oxidant gas supply pipes 20.

The oxidant gas supply pipe 18 includes a large diameter portion 18a having a constant inner diameter, a throat portion 18b having an inner diameter smaller than that of the large diameter portion 18a, a widened portion 18c having an inner diameter that gradually increases from the throat portion 18b toward the distal end side 18B, and a linear motion portion 18d having a substantially constant inner diameter from the proximal side 18A to the distal side 18B.

As described above, the oxidant gas supply hole 6A for installing the lance 6 which introduces the oxidant gas containing oxygen for secondary combustion into the furnace is provided above the furnace wall 2A at which the burner lance (burner 5) is installed.

It is desirable to provide a reflux type water cooling jacket in the oxidant gas supply hole 6A which supplies the oxidant gas containing oxygen. When the water cooling jacket is provided around the lance 6, the lance 6 can be installed regardless of whether the furnace wall is a refractory wall or a water-cooled wall.

FIG. 6 shows a configuration of the oxygen flow rate adjusting mechanism for supplying oxygen to the lance 6. The oxygen flow rate adjusting mechanism includes a pressure control valve 10, a pressure gauge 11, a flow rate controller 12, and a flow rate control valve 13 from the oxygen supply side.

A method for melting/refining the cold iron source using the melting/refining furnace 1 will be described.

First, as shown in FIG. 2, the cold iron source is supplied from the upper opening of the furnace body 2 from which the electrode 4 and the furnace lid 3 are removed (first step).

Next, the electrode 4 is lowered to a predetermined position in the center of the melting/refining furnace 1, and the upper portion of the furnace body 2 is covered with the furnace lid 3. Then, the electrode 4 is energized to melt the cold iron source (second step).

When melting of the cold iron source begins and the molten metal begins to accumulate in the furnace bottom 2B, the cold iron source is auxiliary melted by a plurality of burners 5 provided on the furnace wall 2A of the melting/refining furnace 1 (third step).

Then, at the same time as the start of the third step or immediately after the third step, oxygen is ejected from the lance 6 installed in the oxidant gas supply hole 6A provided in the furnace wall 2A, and the oxygen is reacted with carbon monoxide, hydrogen, or a mixture of carbon monoxide and hydrogen generated during melting of the cold iron source (fourth step).

From the first step to the fourth step is the melting step.

The amount of oxygen supplied from the lance 6 in the fourth step can be determined from the volume of the melting/refining furnace 1. That is, when the volume of the melting/refining furnace 1 is V (m³), and the amount of oxygen introduced in the fourth step is Q (Nm³/h), V/Q is adjusted in a range from 0.1 to 0.8. Here, the volume V of the furnace is the internal volume of the furnace body 2 before the cold iron source is charged.

When the cold iron source is almost melted in the melting step and the molten steel melted at the bottom of the furnace accumulates as molten metal, the fuel supply to the burner lance (burner 5) is stopped and switched to lance mode to introduce oxygen into the molten metal, and thereby impurities are removed. This is the refining step.

### Examples

Using the melting/refining furnace having the internal volume of the furnace body is VI (m³), the melting step (first step to fourth step) was performed. An exhaust gas analyzer and an exhaust gas flow rate measuring device (not shown in figures) were installed at the exhaust gas outlet of the melting/refining furnace so that the amount of carbon monoxide (CO) and hydrogen (H₂) in the exhaust gas can be measured when oxygen gas is introduced into the furnace from the lance in the third step.

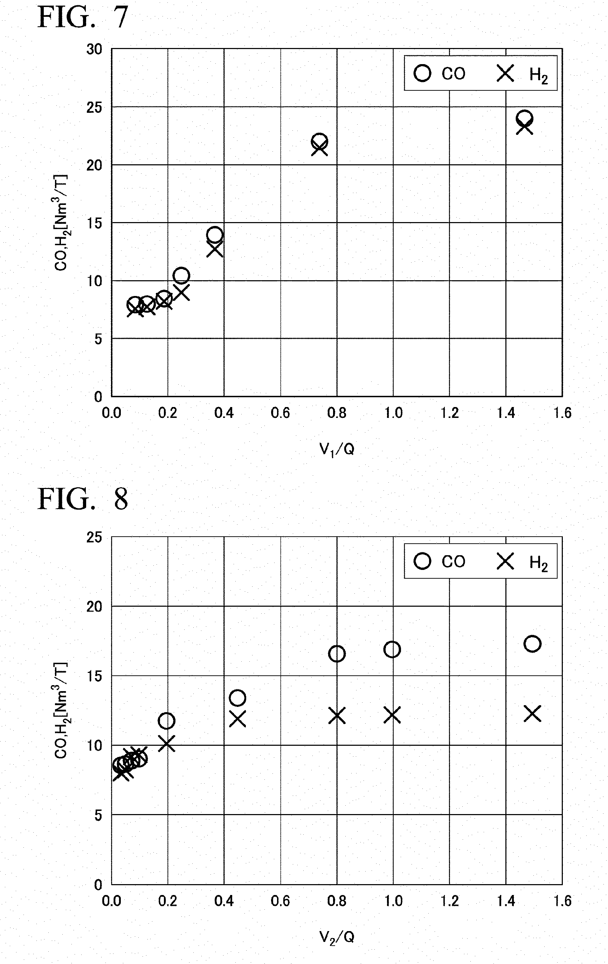

In the third step, the amount Q (Nm³/h) of oxygen introduced into the furnace from the lance 6 was changed using the oxygen flow rate adjusting mechanism, and the amount of carbon monoxide and hydrogen in the exhaust gas from the melting/refining furnace was measured. The results are shown in FIG. 7.

The horizontal axis of FIG. 7 is V₁/Q. The vertical axis is the amount (Nm³/t) of carbon monoxide and hydrogen (CO, H₂) generated per 1 t of an iron obtained by melting the cold iron source.

It was confirmed that when V₁/Q was in a range from 0.1 to 0.8, the amount of CO and H₂ generated decreased as the amount of the oxygen introduced increased. However, when V₁/Q was more than 0.8, the concentrations of CO and H₂ hardly changed. That is, it was understood that the amount of the oxygen introduced was insufficient, and that secondary combustion was not sufficiently performed. It was also confirmed that when V₁/Q was less than 0.1 or more, even when the amount of the oxygen introduced was increased below 0.1, there was no significant change in the amount of CO and H₂ generated.

A similar test was performed using the other melting/refining furnace (inner volume of the furnace body is V₂). The results are shown in FIG. 8. When V₂/Q was in a range from 0.1 to 0.8, an effect of reducing carbon monoxide and hydrogen according to the amount of oxygen introduced from the lance 6 was observed. That is, an appropriate amount of oxygen introduced without waste is when V₂/Q is in the range of 0.1 to 0.8.

### Industrial Applicability

The method of operating a melting/refining furnace and the melting/refining furnace of the present invention can be used for melting a cold iron source in an electric furnace.

### Explanation of reference numeral

- 1: melting/refining furnace (electric furnace)
- 2: furnace body
- 2A: furnace wall
- 2B: furnace bottom
- 3: furnace lid
- 4: electrode
- 5: burner (burner lance)
- 5A: through hole
- 6: lance
- 6A: oxidant gas supply hole
- 10: pressure control valve
- 11: pressure gauge
- 12: flow rate controller
- 13: flow rate control valve
- 18: oxidant gas supply pipe
- 19: fuel fluid supply pipe
- 20: oxidant gas supply pipe
- 21: reflux water cooling jacket

## Claims

1. A method for melting/refining a cold iron source using a melting/refining furnace, wherein the method comprises:
a refining step comprising:
a first step in which a cold iron source is supplied from an upper part of the melting/refining furnace;
a second step in which the cold iron source is mainly melted by energizing an electrode provided in a center of the melting/refining furnace;
a third step in which the cold iron source is auxiliary melted by a burner provided on a furnace wall of the melting/refining furnace; and
a fourth step in which an oxidant gas is ejected from a lance installed in an oxidant gas ejection hole provided in the furnace wall above the burner downward from the horizontal direction, the oxidant gas is reacted with carbon monoxide, hydrogen, or a mixture of carbon monoxide and hydrogen which are generated during melting of the cold iron source; and
a refining step in which impurities are removed by introducing oxygen into the molten iron generated by melting the cold iron source;
the fourth step starts at the same time as or immediately after the start of the third step, and ends with the start of the refining step,
when a volume of the furnace is V (m³) and an amount of oxygen introduced in the fourth step is Q (Nm³/h), V/Q is in a range from 0.1 to 0.8.

2. A melting/refining furnace for a cold iron source comprising:
the melting/refining furnace is an electric furnace having an opening for introducing a cold iron source in the upper part,
the electric furnace comprises:
an electrode which is provided in the center of the electric furnace and configured to melt the cold iron source;
a burner which is provided on the furnace wall and configured to auxiliary melt the cold iron source;
a lance which is provided on the furnace wall above the burner and is configured to introduce oxygen; and
an oxygen flow rate adjustment mechanism which is configured to supply a certain amount of oxygen to the lance,
an install position of the burner and the lance on the furnace wall satisfies the following conditions:
when a distance from a surface of a molten metal to a tip surface of the burner is L₁, and a distance from the surface of the molten metal to the tip surface of the lance is L₂, L₁ < L₂;
when an angle between a center axis of the burner and a horizontal plane is α, and an angle between a center axis of the lance and the horizontal plane is β,
α ≥ β;
90° > α > 0°; and
β ≥ 0°

3. The melting/refining furnace for a cold iron source according to Claim 2, wherein ane oxygen flow rate adjusting mechanism comprises a flow rate control valve, a flow rate indicator, a pressure gauge, and a pressure control valve.
